# EUROPEAN PATENT APPLICATION

(11) **EP 4 831 897 A1**
(43) Date of publication of application: **28.10.2026**
(21) Application number: 26165943.7
(22) Date of filing: 19.03.2026
(51) Int. Cl.: G06Q 30/0601

(54) **ARTIFICIAL INTELLIGENCE (AI)-BASED SYSTEM FOR PRODUCT COMPONENT IDENTIFICATION**

(30) Priority: 24.04.2025 US 202519188308
(71) Applicant: eBay Inc., San Jose, CA 95125 (US)
(72) Inventor: Agarwal, Rahul Ajaykumar, Santa Clara, 95054 (US); Mittal, Shiwam, Santa Clara, 95051 (US)
(74) Representative: Müller-Boré & Partner Patentanwälte PartG mbB

(57) **Abstract**

An artificial intelligence (AI)-based system for product component identification is described. The system may receive images associated with a product listed for sale on an online marketplace. The product may be in a health and dietary supplement category (e.g., a vitamin supplement) or a food category (e.g., a beverage). The system may generate a prompt for a large language model (LLM) based on the images, and the LLM may identify components (e.g., ingredients) of the product according to the prompt. That is, the LLM may recognize text from the images that lists the components and their respective amounts (e.g., weights or percentages). The system may generate an output indicating the identified components and a determination of whether the product listing is approved or denied based on whether the components are permitted or prohibited.

## Description

### BACKGROUND

Online marketplaces support and thus experience numerous and varied activities that facilitate transactions on the online marketplace. Some such activities may include a user (e.g., seller) posting a listing of a product for sale, such as a health and dietary supplement or a food item. The listing may include a description and one or more images of the product. Some components or ingredients in the product may be prohibited in certain regions or countries (e.g., by the Food and Drug Administration (FDA) in the United States (U.S.). As such, administrators of the online marketplace may use a system to identify text from the images in the listing, showing the components of the product, and allow or take down the listing based on whether the components are permitted according to a set of predetermined rules.

### SUMMARY

An artificial intelligence (AI)-based system for identifying components compounds of products is leveraged with an online marketplace. In one or more implementations, a user (e.g., a seller) of the online marketplace may post a product for sale, such as a health and dietary supplement or a food product. The listing may include one or more images of the product that show the ingredients or components of the product. The system may use the images to generate a prompt for an AI model, such as a large language model (LLM), and the LLM may execute based on the prompt to identify components (e.g., ingredients, chemical compounds) in the product. For example, if the images show a bottle of a dietary supplement with a list of components and their respective amounts, then the LLM may identify the components based on the prompt. The LLM may output a list of the components identified from the images, and the system may use the identified components to determine whether the product listing is approved or denied. For example, the system may compare the identified components to a database of component regulations (e.g., an FDA list of banned substances) and determine whether the product is approved or denied according to the database. If denied, the product listing may be taken down from the online marketplace.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures.
FIG. 1 is an illustration of an environment in an example implementation that is operable to employ techniques described herein.
FIG. 2 depicts an example of an AI-based system for product component identification in accordance with aspects of the present disclosure.
FIG. 3 depicts an example of an image of a product in accordance with aspects of the present disclosure.
FIG. 4 depicts an example of a user interface in accordance with aspects of the present disclosure.
FIG. 5 depicts a procedure in an example implementation of an AI-based system for product component identification in accordance with the aspects of the present disclosure.
FIG. 6 illustrates an example of a system that includes an example computing device that is representative of one or more computing systems and/or devices that may implement the various techniques described herein.

### DETAILED DESCRIPTION

### Overview

An AI-based system for product component identification is described. In accordance with the described techniques, items may be available (e.g., listed) for sale on an online marketplace. In one or more implementations, the online marketplace may be accessible by decentralized computing devices that correspond to "clients" of the online marketplace, e.g., users that have accounts with the online marketplace. Users of the online marketplace may have some control over which items they list with or purchase from the online marketplace. For example, the users may determine when to list or purchase items and may do so from different locations via a website or mobile application for the online marketplace. When a seller posts a product listing for sale, the seller may include information about the product such as a title, a description, and one or more images, and any other relevant information.

In some implementations, users may buy and sell products on the online marketplace that are in the health and dietary supplements or food categories. For example, a seller may list vitamin supplements and energy drinks. A product listing for a such a product may include one or more images of the product. In some cases, at least one image in the product listing may depict a list of active ingredients or components that make up the product as well as the respective weight (e.g., in milligrams (mg)) or percent composition of each component. Some components may be allowed in some geographic regions but prohibited in other geographic regions (e.g., categorically or above a certain weight or percent composition). For example, some components may be banned in the U.S. and accordingly, listed on a list of banned ingredients by the FDA. As such, administrators of the online marketplace may employ a system to detect prohibited product components in health and dietary supplements and food products listed for sale and remove such product listings from the online marketplace.

In one or more implementations, the system may extract text from the images in the product listing (e.g., the ingredients list). For example, the system may use optical character recognition (OCR) to convert text in the image into a machine-readable text format. The extracted text may be provided to a rule decision system, which may include a set of pre-determined, regular expression (Regex) rules. The predetermined rules may determine whether a particular product or any of its individual components or ingredients are allowed or prohibited in a specific geographic region (e.g., categorically or above a particular quantity). For example, a rule may state that component X is prohibited in country Y above a percent composition Z.

If all of the components identified from the images satisfy the set of rules (e.g., are permitted), then the system may approve the product listing for sale. Alternatively, if any of the components fail to satisfy a rule (e.g., are prohibited categorically or because they are of a greater weight than is allowed), then the system may take down the product listing, at least for the relevant geographic area.

If the set of pre-determined rules are insufficient for determining whether a particular product is permitted or prohibited (e.g., if none of the rules account for a specific component), then the product listing may be directed to a customer support agent or a compliance officer to manually review the product and its components. For example, the customer support agent may manually verify each individual component against a list of prohibited components in each applicable geographic region.

However, in existing systems, each of these pre-determined rules may be manually developed by an administrator of the online marketplace (e.g., a compliance officer). As such, existing systems and methods may be inefficient at scale, particularly as more components, weight or percent composition thresholds, and geographic areas are added. It may not be possible to review every product listed on the online marketplace as the number of sellers increases, which may allow prohibited products to be listed and potentially purchased. Moreover, it is unrealistic to rewrite the pre-determined rules each time a new health and dietary supplement or food product is posted. Additionally, the system may be inefficient by calling each pre-determined rule one at a time for each component identified from the images. Sellers may also post prohibited products by including poor-quality images (e.g., blurry, dark) in their product listings, failing to include any images at all, or including false information in an item description, such that the product's ingredients are unidentifiable.

To address these limitations, an AI-based system for product component identification is described. In one or more implementations, the described techniques involve an AI-based system, including an LLM, implemented as part of an online marketplace. The AI-based system may be capable of identifying components of a product from product listing images and executing the LLM based on a single prompt to determine whether a product listing should be approved or denied based on the components.

Specifically, a user (e.g., a seller) may post a product listing on the online marketplace. The product listing may be for a product in a health and dietary supplements category (e.g., vitamins) or a food category (e.g., soda beverages). The product listing may include one or more images of the product. For example, such an image may depict a vitamin bottle, the bottle showing a list of every component or ingredient in the vitamins. The system may use the images to generate a prompt for an LLM or some other multi-modal AI model. Alternatively, a pre-defined prompt may be applied for the relevant images.

Based on the prompt, the LLM may execute to identify one or more components of the product from the images. The LLM may be trained on data related to component regulations in different regions, countries, and other geographic regions (e.g., an FDA database of banned ingredients). In some examples, the LLM may be a multi-modal model capable of receiving (as inputs) and outputting data in different formats, including images, text, audio, and so forth. The LLM may output a list of the components identified from the images, and the system may use the identified components to determine whether the product listing is approved or denied. For example, the product listing may be denied if any components of the product are prohibited or banned in a given geographic region (e.g., at a particular percentage or weight). If the product listing is denied, the product listing may be taken down from the online marketplace. In some examples, a different AI model (e.g., a multi-modal model) may apply the prompt to the image to identify text in the image. Then, the identified text may be provided to the LLM for identifying the component compounds and determining whether to approve or deny the listing.

In some implementations, a product listing is approved or denied based on comparing the identified components to a dataset, database, or a set of rules (e.g., a lookup database) that indicate which health and dietary supplements, foods, ingredients, or other components are prohibited either categorically or above a threshold amount. In at least one variation, the AI-based system may send the output of the LLM to a user (e.g., an administrator of the AI-based system) for their manual review, where the user may determine to approve or deny the listing based on comparing each of the identified components to the dataset.

The described techniques may result in several improvements, including faster processing, improved data storage and data retrieval efficiency, and enhanced graphical user interface (GUI) features, among other improvements. For example, configuring the LLM to identify each component or ingredient of a product based on a single prompt may improve efficiency of the system. Moreover, training the LLM on databases of component regulations may result in faster processing over prior systems. Specifically, prior systems rely on individually calling pre-determined rules corresponding to each applicable component regulation instead of utilizing a trained LLM, often resulting in errors in component identification or failures to identify certain components at all. Additionally, after identifying prohibited components, prior systems are unable to recommend removal of product listings or restrict certain products from being listed at all. As a result, the described system may process more product listings in less time and more accurately to ensure prohibited products are not transacted on the online marketplace.

The described techniques may also improve data storage and retrieval efficiency by locating the processes for collecting product images, analyzing the images (using the LLM), and enforcing component regulations in the same system. For example, automatically removing non-compliant listings from the online marketplace based on the output of the LLM reduces manual efforts (e.g., by compliance officers) and the system's reliance on regex rules. The LLM may also be retrained as new regulations develop to output more accurate results over time, further improving the LLM's overall performance. In addition, the dataset or database indicating which health and dietary supplements, foods, ingredients, or other components are prohibited either categorically or above a threshold amount may be organized for methodical retrieval. For example, the database may be organized based on weighted composition amounts within various products, and the LLM may also be trained based on weighted composition amounts within various products. Additionally, the database may be organized and the LLM may be trained to identify particular targeted words (e.g., common compositions) or to identify the country or countries and relevant database information associated with that country.

In some aspects, the techniques described herein relate to a computer-implemented method including: receiving one or more images associated with a product listing for an online marketplace, wherein the product listing is for a product in at least one of a health and dietary supplements category or a food category; generating a prompt for a large language model (LLM) based on the one or more images; executing the LLM based on the prompt to identify one or more components of the product from the one or more images; and generating an output based on executing the LLM, wherein the output indicates the one or more components identified from the one or more images and a determination of whether the product listing is approved or denied.

In some aspects, the techniques described herein relate to a computer-implemented method further including comparing the one or more components to a dataset that comprises component regulations for a geographic region; and determining that the product listing is approved or denied based on the dataset indicating that the one or more components are allowed or banned in the geographic region.

In some aspects, the techniques described herein relate to a computer-implemented method further including comparing the one or more components to a set of rules that indicate whether a component is allowed in a geographic region; and determining that the product listing is approved or denied based on whether the component is allowed in the geographic region according to the set of rules.

In some aspects, the techniques described herein relate to a computer-implemented method further including sending the output to a user for manual review, wherein the determination of whether the product listing is approved or denied is based on the manual review.

In some aspects, the techniques described herein relate to a computer-implemented method further including displaying, to a user via a user interface, an indication that the product listing is denied based on the output.

In some aspects, the techniques described herein relate to a computer-implemented method, wherein each component corresponds to a weight or percent composition of the product.

In some aspects, the techniques described herein relate to a computer-implemented method, wherein identifying the one or more components of the product comprises recognizing text in the one or more images that corresponds to the one or more components.

In some aspects, the techniques described herein relate to a computer-implemented method, wherein the output indicates that none of the one or more images depicted the one or more components.

In some aspects, the techniques described herein relate to a computer-implemented method, wherein the product listing is denied based on at least one component of the one or more components having an amount that is greater than a threshold amount.

In some aspects, the techniques described herein relate to a computer-implemented method further including removing the product listing from the online marketplace based on the product listing being denied.

In some aspects, the techniques described herein relate to a computer-implemented method, wherein the product listing is denied based on the product itself being banned in a geographic region.

In some aspects, the techniques described herein relate to a system including: one or more processors; and memory storing instructions that, when executed by the one or more processors, cause the system to: receive one or more images associated with a product listing for an online marketplace, wherein the product listing is for a product in at least one of a health and dietary supplements category or a food category; generate a prompt for a large language model (LLM) based on the one or more images; execute the LLM based on the prompt to identify one or more components of the product from the one or more images; and generate an output based on executing the LLM, wherein the output indicates the one or more components identified from the one or more images and a determination of whether the product listing is approved or denied.

In some aspects, the techniques described herein relate to a system, wherein the instructions further cause the system to compare the one or more components to a dataset that comprises component regulations for a geographic region; and determine that the product listing is approved or denied based on the dataset indicating that the one or more components are allowed or banned in the geographic region.

In some aspects, the techniques described herein relate to a system, wherein the instructions further cause the system to compare the one or more components to a set of rules that indicate whether a component is allowed in a geographic region; and determine that the product listing is approved or denied based on whether the component is allowed in the geographic region according to the set of rules.

In some aspects, the techniques described herein relate to a system, wherein the instructions further cause the system to send the output to a user for manual review, wherein the determination of whether the product listing is approved or denied is based on the manual review.

In some aspects, the techniques described herein relate to a system, wherein the instructions further cause the system to display, to a user via a user interface, an indication that the product listing is denied based on the output.

In some aspects, the techniques described herein relate to a system, wherein each component of the one or more components corresponds to a weight or percent composition of the product.

In some aspects, the techniques described herein relate to a system, wherein each component corresponds to a weight or percent composition of the product.

In some aspects, the techniques described herein relate to a system, wherein the instructions to identify the one or more components of the product further cause the system to recognize text in the one or more images that corresponds to the one or more components.

In some aspects, the techniques described herein relate to a system, wherein the output indicates that none of the one or more images depicted the one or more components.

In some aspects, the techniques described herein relate to a system, wherein the product listing is denied based on at least one component of the one or more components having an amount that is greater than a threshold amount.

In some aspects, the techniques described herein relate to a system, wherein the instructions further cause the system to remove the product listing from the online marketplace based on the product listing being denied.

In some aspects, the techniques described herein relate to a system, wherein the product listing is denied based on the product itself being banned in a geographic region.

In some aspects, the techniques described herein relate to a non-transitory computer-readable media storing instructions that, when executed by one or more processors, cause the one or more processors to perform operations including: receiving one or more images associated with a product listing for an online marketplace, wherein the product listing is for a product in at least one of a health and dietary supplements category or a food category; generating a prompt for a large language model (LLM) based on the one or more images; executing the LLM based on the prompt to identify one or more components of the product from the one or more images; and generating an output based on executing the LLM, wherein the output indicates the one or more components identified from the one or more images and a determination of whether the product listing is approved or denied.

In the following discussion, an exemplary environment is first described that may employ the techniques described herein. Examples of implementation details and procedures are then described which may be performed in the exemplary environment as well as other environments. Performance of the exemplary procedures is not limited to the exemplary environment and the exemplary environment is not limited to performance of the exemplary procedures.

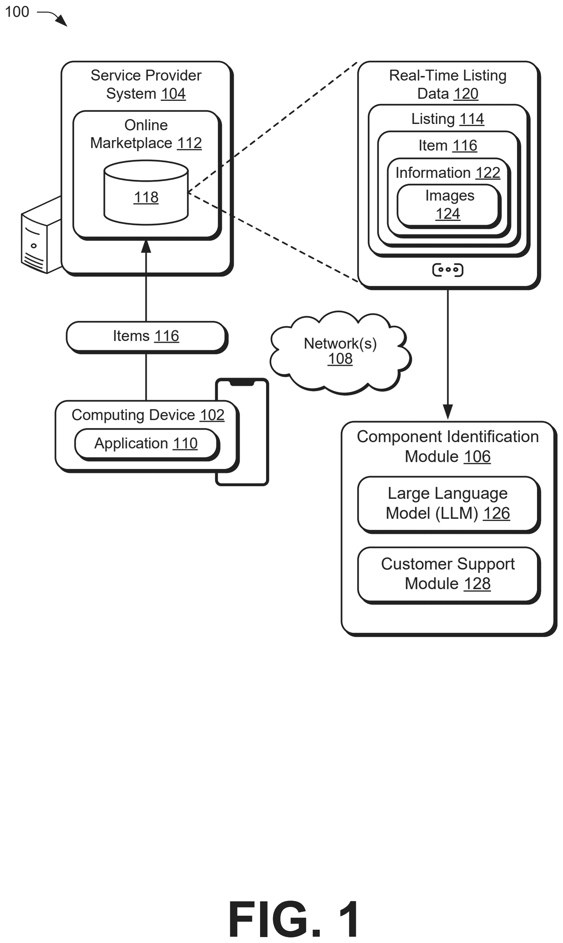

FIG. 1 is an illustration of an environment 100 in an example implementation that is operable to employ techniques described herein. The environment 100 includes a computing device 102, a service provider system 104, and a component identification module 106. In one or more implementations, the computing device 102, the service provider system 104, and the component identification module 106 are communicatively coupled, one to another, via network(s) 108. One example of the network(s) 108 is the Internet, although one or more of the computing device 102, the service provider system 104, and the component identification module 106 may be communicatively coupled using one or more different connections or different networks in various implementations (e.g., a cloud).

Although the computing device 102 is depicted in the environment 100 as being separate from the service provider system 104 and the component identification module 106, in one or more implementations, an entirety or various portions of the component identification module 106 are implemented at or by the computing device 102 and/or the service provider system 104. In at least one implementation, for example, at least a portion of the component identification module 106 is implemented by an application 110 of the computing device 102 and/or using various resources of the computing device 102, such as hardware resources, an operating system, firmware, and so forth. Additionally, or alternatively, at least a portion of the component identification module 106 is implemented by resources (e.g., server-based storage, processing, and so on) of the service provider system 104. Alternatively, or additionally, at least a portion of the component identification module 106 is implemented using a third-party service, such as a web services platform that provides one or more hardware and/or other computing resources to support provision of services by web service providers.

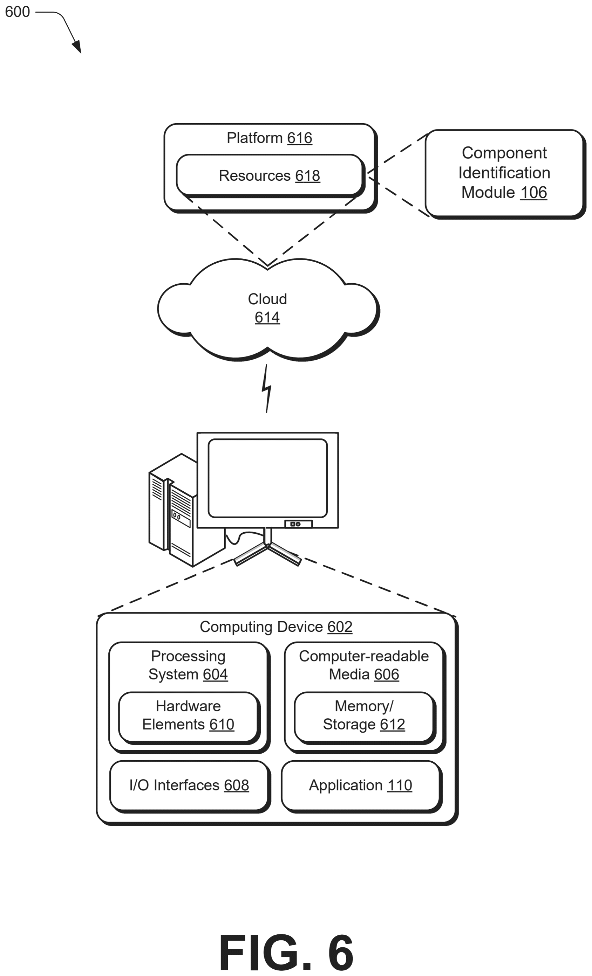

Computing devices that implement the environment 100 are configurable in a variety of ways. A computing device, for instance, is configurable as a desktop computer, a laptop computer, a mobile device (e.g., assuming a handheld configuration such as a tablet or mobile phone), an Internet-of-Things (IoT) device, a wearable device (e.g., a smart watch, a ring, or smart glasses), an augmented reality (AR)/virtual reality (VR) device (e.g., the smart glasses), a server, and so forth. Thus, a computing device ranges from full resource devices with substantial memory and processor resources to low-resource devices with limited memory and/or processing resources. Additionally, although in instances in the following discussion reference is made to a computing device in the singular, a computing device is also representative of a plurality of different devices, such as multiple servers of a server farm utilized to perform operations "over the cloud" as further described in relation to FIG. 6.

In at least one implementation, the application 110 supports communication of data across the network(s) 108, such as between the computing device 102 and the service provider system 104 and/or between the computing device 102 and the component identification module 106. By supporting such data communication, the application 110 provides respective users of the computing device 102 (and users of other computing devices) access to an online marketplace 112. For example, the computing device 102 receive data from the service provider system 104. Based on the received data, the application 110 causes various systems of the computing device 102 to output user interfaces of the online marketplace 112, such as by displaying user interfaces via display devices or making accessible voice-based user interfaces.

Through interaction of a user with the computing device 102, the application 110 receives user input via one or more user interfaces of the online marketplace 112. Examples of such input include, but are not limited to, receiving touch input in relation to portions of a displayed user interface, receiving one or more voice commands, receiving typed input (e.g., via a physical or virtual ("soft") keyboard), receiving mouse or stylus input, and so forth. One example of the application 110 is a browser, which is operable to navigate to a website of the online marketplace 112, display pages of the website, and facilitate user interaction with web pages of the online marketplace 112's website. Another example of the application 110 is a web-based computer application of the online marketplace 112, such as a mobile application or a desktop application. The application 110 may be configured in different ways, which may enable users to interact with their computing devices and by extension perform actions on the online marketplace 112, without departing from the spirit or scope of the techniques described herein.

In one or more implementations, users register with the service provider system 104 to obtain respective user accounts with the online marketplace 112. Such registration may include, for instance, providing an email address and establishing a username and password combination. Subsequent to registering with the service provider system 104, computing devices (e.g., the computing device 102) may facilitate signing into, or otherwise authenticating to, the user account in various ways, such as by receiving a username and matching password, receiving biometric information (e.g., at least one image captured of a face or information captured of another body part such as a thumb or finger) that suitably matches stored biometric information associated with the user account, and so forth. In at least some scenarios, however, the user account via which a user accesses the online marketplace 112 may be a guest account that does not require a user to sign in or otherwise authenticate to an already established account before interacting with the online marketplace 112.

Broadly speaking, the online marketplace 112 is configured to generate listings 114 for items 116 (e.g., also referred to herein as item listings and product listings) and to expose those listings 114 (e.g., publish them) across the network(s) 108 to one or more computing devices, including the computing device 102. For example, the online marketplace 112 may generate listings 114 for items 116 for sale and expose those listings to computing devices, such that the users of the computing devices can interact with the listings via user interfaces to initiate transactions (e.g., purchases, sales, add to wish lists, share, and so on) in relation to the respective item 116 or items 116 of the listings 114. In accordance with the described techniques, the online marketplace 112 is configured to generate listings 114 for one or more types of physical goods or property (e.g., clothing and/or clothing accessories, collectibles, furniture, decorative items, textiles, luxury items, electronics, health and dietary supplements, food products, real property, physical computer-readable storage having one or more video games stored thereon, and so on), services (e.g., babysitting, dog walking, house cleaning, and so on), digital items (e.g., digital images, digital music, digital videos) that can be downloaded via the network(s) 108, and blockchain backed assets (e.g., non-fungible tokens (NFTs)), to name just a few.

In the illustrated environment 100, the online marketplace 112 may include a storage device 118, which is depicted as maintaining real-time listing data 120. The real-time listing data 120 includes a set of listings 114 of the online marketplace 112. The storage device 118 may represent one or more databases and/or other types of storage capable of storing the real-time listing data 120. Examples of the storage device 118 include, but are not limited to, mass storage and virtual storage. In one or more implementations, for example, the storage device 118 may be virtualized across a plurality of data centers and/or cloud-based storage devices. The service provider system 104 may implement the online marketplace 112 by using servers that execute stored instructions to deploy various services of the service provider system 104, such that those services perform numerous computations which are effective to provide the functionality described above and below. It is to be appreciated that the online marketplace 112 may include more, fewer, or different components without departing from the spirit or scope described herein.

In one or more implementations, the online marketplace 112 is accessible by decentralized computing devices that correspond to "clients" of the online marketplace 112, e.g., users that have accounts with the online marketplace 112 and/or that access the online marketplace as a "guest" that is not signed to such an account or tracked as a user with an account. In at least some scenarios, but for the provision of accounts and system guardrails implemented by aspects of the online marketplace 112 (e.g., user interfaces of the application 110), the online marketplace 112 does not generally control actions of the users to use functionality of the online marketplace 112 to list items thereon. For instance, a number (e.g., most) of the users of the online marketplace 112 may not be employed by or otherwise similarly controlled by a company associated with the online marketplace 112. In this way, the users of the online marketplace 112 may exert more control over the items 116 listed with the online marketplace 112 (e.g., the items 116 that those users decide to list through the online marketplace 112) than the company associated with the online marketplace 112 (or its employees or agents).

Users that cause items 116 to be listed on the online marketplace 112 may be referred to as "sellers," whereas users that purchase or otherwise obtain items listed 116 on the online marketplace 112 via its listings may be referred to as "buyers." Sellers and buyers both interact with user interfaces of the online marketplace 112 (e.g., via the application 110) to perform the desired functionality. In addition, an individual user of the online marketplace 112 can interact via the interfaces to be both a seller and a buyer on the online marketplace 112, such as by interacting with the user interfaces to have caused one or more items 116 to be listed on the online marketplace 112 and by interacting with the user interfaces to purchase one or more items 116 from the listings of the online marketplace 112.

A user that is a seller, for instance, may interact with one or more user interfaces of the online marketplace 112 (e.g., output via the application 110) to provide information about one or more items 116 which the user is causing to be listed on the online marketplace 112. Such user interfaces may include prompts that instruct, or guide, users that are sellers to provide information 122 about items 116 being listed. Examples of information that such interfaces prompt sellers for and that those users provide include, but are not limited to, a title, description (of the item 116), one or more prices (e.g., to purchase the item 116 now and/or a minimum starting bid for the item 116), brand information, size, year, color(s), shipping information (e.g., cost and/or types available), delivery information, return information, payment information, images 124, videos, models, authenticity information, item history (e.g., chain of custody), and condition (of the item 116), to name a few.

One or more portions of such information may be referred to herein as attributes of the listing 114. For example, a title of the listing 114 may be an attribute of the listing, a description of the item 116 being listed may be an attribute of the listing 114, one or more images uploaded or selected for the listing 114 may be one or more attributes of the listing 114, color(s) of the item 116 may be an attribute of the listing 114, one or more categories of the item 116 may be attributes of the listing 114, and so forth.

In one or more implementations, the categories of the online marketplace 112 include a category hierarchy (e.g., a tree structure) in which more specific child categories (e.g., smartphones or vitamins) fall under more generic parent categories (e.g., electronics or health and dietary supplements, respectively). Additionally, or alternatively, the categories of the online marketplace 112 include a plurality of sector categories (e.g., sports) each including one or more highest-level or root categories (e.g., sports memorabilia, sporting goods). Given this, the categories associated with a listing 114 for an item 116 can include the categories of the category hierarchy that the item 116 falls under (e.g., from the root category to the lowest-level or leaf category), and one or more sector categories to which the item 116 belongs.

In one or more implementations, the online marketplace 112 saves and maintains the information 122 for a listing 114 in the storage device 118 in fields of a data structure or data record populated for the listing 114, where a given field and the information 122 populated and maintained for the given field correspond to a particular attribute of the listing 114. For instance, a 'title' field of such a data structure or data record may be populated with information 122 (e.g., text) input into a user interface by a seller of a listing 114. The title field and the information 122 input by the user as the title of the listing 114 correspond to an attribute of the listing 114, e.g., a title attribute. In one or more implementations, one or more of the attributes of a listing 114 may be derived and then populated by the online marketplace 112, such as by the online marketplace 112 processing one or more portions of the information input by a user to populate one or more respective attributes of the listing 114.

The component identification module 106 may support an LLM 126 and a customer support module 128. The LLM 126 may be a multimodal LLM capable of processing multiple types of inputs, such as text, images 124, and videos. For example, the multimodal LLM may receive an image (e.g., as an input) and output text. In some implementations, the LLM 126 may be trained on various data including ingredient regulations in different geographic regions. For example, the LLM 126 may be trained on a set of rules or a database that indicates what health and dietary supplements, foods, ingredients, or other components are prohibited in a specific country either categorically or above a particular threshold amount. In the U.S., this may include a database of FDA non-approved ingredients, a database of FDA banned ingredients, a U.S. Customs and Border Patrol (CBP) Prohibited and Restricted Items database, and a U.S. Drug Enforcement Agency (DEA) Controlled Substances Schedule. Additionally, or alternatively, the database may include European Medicines Agency (EMA) databases, Operation Pangea (managed by Interpol), and other examples. The customer support module 128 may provide a platform for one or more customer support agents (e.g., including compliance officers or other administrative employees of the online marketplace) to review listings 114.

In accordance with the described techniques, a seller may list one or more items 116 or products for sale on the online marketplace 112. The items 116 may include dietary supplements, health supplements, and food products. For example, the items 116 may be listed under a health and dietary supplements category or a food category. In the corresponding listing 114, the seller may include information 122 that is relevant to the item 116 including a title (e.g., a name of the item 116), a description (e.g., including information such as a manufacturer of the item 116, its uses, etc.), and one or more images 124. At least one of the images 124 may depict the item 116 in its packaging (e.g., a bottle or other container or package), which may display some text. For example, the front of the packaging may depict the name of the item 116, the manufacturer, and other information, while the back of the packaging may depict an ingredients panel that lists each component included in the item 116, and a weight (e.g., in mg) or a percent composition of each component.

Once a listing 114 of an item 116 has been posted by a seller, the component identification module 106 may receive the images 124 that were included with the listing 114. Alternatively, the component identification module 106 may obtain the images 124 for text identification before the listing 114 is posted, such as when the seller uploads the images 114 when inputting listing information. In such cases, the listing 114 may not be posted if the item 116 includes prohibited components or is itself prohibited.

The component identification module 106 may generate a prompt for the LLM 126 to analyze the components of the item 116 in the listing 114 to identify whether any of the components are prohibited in a particular geographical region (e.g., a country). Alternatively, the prompt may be predefined for the LLM 126. For example, a prompt may be "What are the ingredients and their amount if greater than a number," where the number may be predefined. In this way, the component identification module 106 may prompt the LLM 126 to identify the components or ingredients that make up the item 116 from the images 124. For example, if an image 124 depicts the packaging of the item 116, the LLM 126 may recognize text on the packaging and identify the components or ingredients of the item 116.

Based on prompting the LLM 126, the component identification module 106 may output a list (e.g., in a text format) of the components identified from the images 124. In some examples, the component identification module 106 may also output the respective weights or percentage compositions of each component. In some implementations, the component identification module 106 may identify target name identifiers from general descriptions (e.g., brand names or non-scientific names), which allows the disclosed technology to identify regulated substances in item listings or seller-uploaded images to compare the target component to a relevant database. In some cases, the standard, internationally recognized active ingredient name may be what is regulated, monitored, and listed in the database. For example, Methylphenidate may be regulated and listed as a Schedule II controlled substance in the U.S. and used to treat ADHD and narcolepsy, where Methylphenidate is the name of the substance used in regulatory documents, customs forms, and medical records. Brand names for this drug may include Ritalin (Novartis), Concerta (Janssen). Daytrana (patch version), Equasym (Europe), Metadate CD (U.S.). However, these names may not be flagged directly unless the underlying ingredient (e.g., Methylphenidate) is matched.

Additionally, the component identification module 106 may output a determination of whether the listing 114 should be approved or denied based on the components. For example, if all components are allowed in a specified geographic region, then the component identification module 106 may indicate that the item 116 is approved for sale on the online marketplace, and the listing 114 will be allowed. Alternatively, if any one of the components are prohibited in the specified geographic region, then the component identification module 106 may indicate that the item 116 is denied, and the listing 114 will be removed from the online marketplace 112.

The system may monitor where the seller is located and shipping an item 116 from as well as where the seller is attempting to sell and ship the item 116 to. As such, the described techniques may support product component identification wen the seller is located in and listing an item 116 for sale in a first country (e.g., the U.S.) and a second country (e.g., France). In some examples, it may be that a component is allowed to be listed for sale in the first country, but not the second country. Alternatively, the component may be allowed in both countries, however only below a certain threshold amount in the second country. In such cases, the LLM 126 may be trained to detect these types of differences and the component identification module 105 may allow the same item 116 to be listed for sale in the first country but not the second country.

Having considered an example of an environment, consider now a discussion of some example details of the techniques for using an AI-based system for component identification in accordance with one or more implementations.

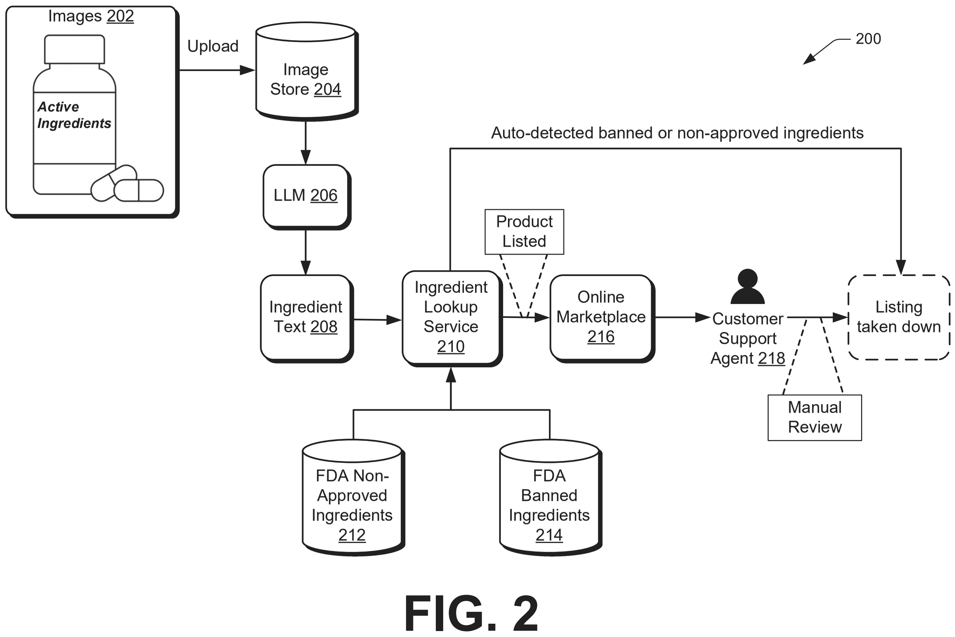

FIG. 2 depicts an example of an AI-based system 200 for product component identification in accordance with aspects of the present disclosure. The AI-based system 200 may be implemented in or otherwise supported by the computing device 102, the service provider system 104, and the component identification module 106, as described with reference to FIG. 1. For instance, the AI-based system 200 may include an image store 204, which may be an example of a storage device 118, an LLM 206, which may be an example of an LLM 126, and an online marketplace 216, which may be an example of the online marketplace 112.

In the AI-based system 200, a seller may list one or more items or products for sale on the online marketplace 112. For example, the seller may list a product (e.g., an edible product) for sale in a health and dietary supplement category (e.g., vitamins) or a food category (e.g., beverages). In the corresponding listing, the seller may include relevant information about the product, including a title (e.g., a name of the product), a description (e.g., information such as a manufacturer of the product, its uses, etc.), and one or more images 202, which may be examples of the images 124 described with reference to FIG. 1. In some examples, the seller may take the images using a computing device (e.g., a smartphone, tablet, or laptop camera) or the images may be uploaded from some image database accessible by the seller.

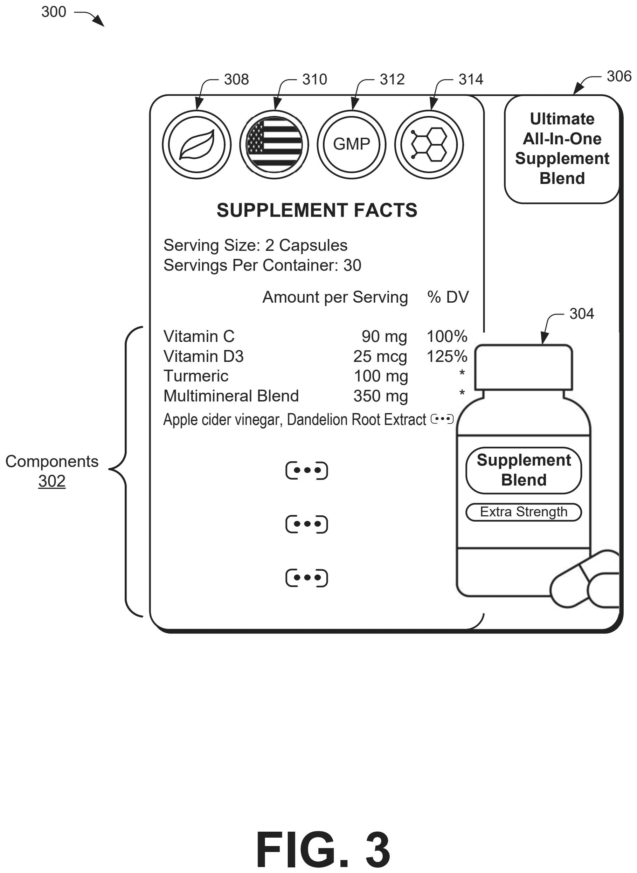

At least one of the images 202 may depict the product in its packaging, which may show some text. For example, an image 202 may depict a vitamin bottle (e.g., listed in the health and dietary supplement category), where the front and/or back of the bottle may depict information about the vitamin. For example, bottle may show a name (e.g., Max Performance Gummies), a manufacturer, ingredient information (e.g., a "supplement facts" panel), and other information. The ingredient information may list a serving size and servings per container, a list of components or ingredients included in the product, an amount of each component (e.g., a weight or a percent composition), and so forth. An example of the image 202 is described with reference to FIG. 3.

The images 202 may be uploaded to an image store 204, which may represent one or more databases and/or other types of storage capable of storing real-time image data. The image store 204 may store image data for any number of product listings in different categories, however only images related to health and dietary supplements and food products will be provided to the LLM 206.

The LLM 206 may be a multi-modal LLM capable of processing multiple types of inputs, such as text, images 202, and videos. In some implementations, the LLM 206 may be trained on various data including ingredient regulations in different geographic regions. For example, the LLM 206 may be trained on a set of rules (e.g., a lookup database) that indicate what health and dietary supplements, foods, ingredients, or other components are prohibited in a specific country either categorically or above a threshold amount. This data may include various different modes or types of data, including text data (e.g., names, ingredients, etc.) and image data (e.g., images of dietary supplements), among others. In some examples, the data may be manipulated to be utilized by the LLM 206 more efficiently. In some implementations, the LLM 206 may be further trained on health and dietary supplements and food products listed on the online marketplace 216 for the first time so the LLM 206 is able to subsequently recognize new related products or components and identify components more accurately. Additionally, or alternatively, the LLM 206 may be trained to identify a target identifier from a generic or brand name. For example, the LLM 206 may be trained to identify the compound Methylphenidate from the brand names Ritalin (Novartis), Concerta (Janssen). Daytrana (patch version), Equasym (Europe), Metadate CD (U.S.).

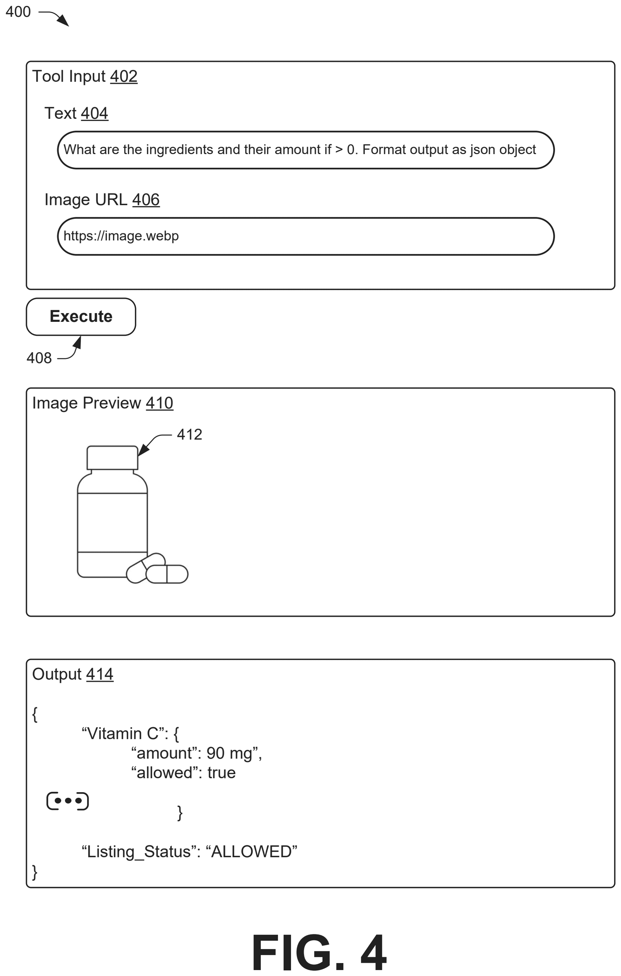

The images 202 may be used to generate a prompt for the LLM 206. The prompt may be a question, instruction or other input in a text format (e.g., JavaScipt Object Notation (JSON)) that guides the LLM 206 to generate a specific response or output. For example, as described with reference to FIG. 4, the prompt may include the following text: "What are the ingredients and their amount if > 0. Format output as json object." Such prompts may be generated based on the system recognizing that the images 202 include some sort of text (e.g., an ingredients list). In some implementations, the prompt may be generated based on the images 202 by a model other than the LLM 206 (e.g., another LLM or other multi-modal model) that is trained to generate prompts that instruct LLMs to identify product components. In some examples, the prompt may differ if the product is a health and dietary supplement or a food item. For example, the prompt may use specific language to instruct the LLM 206 to look for "active ingredients" or "compounds" for health and dietary supplements but "ingredients" for food items, as the text in the images 202 may be more likely to be labeled as such (e.g., on product packaging).

The prompt may instruct the LLM 206 to identify the ingredients or components of the product and their respective amounts based on the images 202 and provide an output in a JSON format. The prompt instructs the LLM 206 to include the components and their amounts (e.g., in weight or percent composition) if greater than zero (e.g., 0 mg or 0%). Additionally, the prompt may include instructions to trigger identification of both a component that is completely restricted (e.g., at any percentage or weight) and a component that is only restricted when it includes an amount over a threshold. Additionally, or alternatively, the prompt may include specific language or instructions based on the geographic location of the seller (e.g., where the seller would ship the product from) or the geographic locations of potential buyers (e.g., where the seller would ship the product to).

The prompt may be modified to obtain different results from the LLM 206. For example, a user may change the prompt to look for compounds above a particular percentage instead above a particular weight, or a user may change the specified percentage or weight. In some examples, the prompt may pre-defined for the LLM 206. For example, the prompt may default to "What are the ingredients and their amount if > 0. Format output as json object." Additionally, or alternatively, the prompt may ask the LLM 206 to identify specific components or products that are known to be prohibited.

The system may prompt the LLM 206 to identify the components of the product from the images 202. For example, if the images 202 depict some sort of "supplement facts" or other ingredient information, the LLM 206 may recognize the text in the images and identify the components and their respective amounts from the text. Additionally, the LLM 206 may recognize text from images in languages other than English such that the LLM 206 may identify components in many languages for many different geographic regions. In some examples, the LLM 206 may only identify components and refrain from identifying any other text on the packaging (such as a serving size, the name of the product, and any other text not including a component). In this way, the LLM 206 may identify which of the images 202 include text that is relevant to the components and which do not.

Based on the prompt, the LLM 206 may output ingredient text 208, which includes the text identified from the images 202. For example, if an image 202 shows the supplement facts of a vitamin, the ingredient text 208 may include a serving size (e.g., 2 gummies) and a number of servings per container (e.g., 30). In addition, the ingredient text 208 may include a list of ingredients (e.g., components) per serving, which may include the following information: calories (e.g., 10), total carbohydrates (3 grams (g) or 1%), total sugars (2g, including 2g added sugars or 4% daily value (DV)), Vitamin B6 (e.g., as Pyridoxine HCI, 1 mg (29.5%)), Folate (as 240 microgram (mcg) Folic Acid, 400 mcg DFE (50%)), Vitamin B12 (as Cyanocobalamin, 2.4 mcg (50%)), Iodine (as Potassium Iodide, 100 mcg (33.5%)), Apple Cider Vinegar (e.g., 1000 mg (5% Total Acids)), Pomegranate Fruit Juice Powder (80 mg), and Beet Root Juice Powder (80 mg). Additionally, the ingredient text 208 may list other ingredients (with or without amounts), such as glucose, sucrose, water, glucose, pectin, natural flavoring (e.g., apple), sodium citrate, citric acid, glazing agent (e.g., carnauba wax and vegetable oil), unfiltered liquid apple cider vinegar, purple carrot juice concentrate, and beta-carotene (1%).

The ingredient text 208 may be compared to information in an ingredient lookup service 210. The ingredient lookup service 210 may support a dataset of component regulations for a geographic region. For example, regarding products listed for sale in the U.S., the ingredient lookup service 210 may support a database of FDA non-approved ingredients 212 (e.g., ingredients or compounds that the FDA has yet to address) and a database of FDA banned ingredients 214. If a compound of a product or the product itself is listed in such databases, the product is prohibited from being sold on the online marketplace 216. Accordingly, the system may determine whether the product is approved or denied for listing on the online marketplace 216 based on whether any of the components of the product are included in the database of FDA non-approved ingredients 212 or the database of FDA banned ingredients 214.

The database of FDA non-approved ingredients 212 and the database of FDA banned ingredients 214 may be managed by FDA administrators and periodically updated as new ingredients are developed or used in products in the health and dietary supplement or food categories. For example, for databases managed by the U.S. federal government, another country or state-managed database may transmit a notice to update the U.S. database to add new components. In such cases, the system may automatically update and retrain the LLM 206 with the updated input.

In some implementations, the system may make determinations on approval or denial of a product based on the database (e.g., the database of FDA non-approved ingredients 212, the database of FDA banned ingredients 214, and so forth) having a target component at a particular percentage, weight, or range of percentage or weight. For example, the LLM 206 may determine that the target component is below a threshold and as such, is permitted. In another example, the LLM 206 may determine that the target component is above the threshold and as such, is denied. In this way, in addition to recognizing a one-to-one mapping between the text identified from the images 202 and the database, the LLM 206 is also able to identify amounts and amount ranges of components and analyze a product more granularly.

Different databases may be utilized in different regions or countries. In addition to the database of FDA non-approved ingredients 212 or the database of FDA banned ingredients 214 the U.S., the AI-based system 200 may support a database of U.S. CBP Prohibited and Restricted Items and U.S. DEA Controlled Substances Schedule. In addition, the AI-based system 200 may support European Medicines Agency (EMA) databases, Operation Pangea managed by Interpol, a Heath Canada Drug Product Database (DPD), Australian Therapeutic Goods Administration (TGA) databases, Japanese Pharmaceuticals and Medical Devices Agency (PMDA) databases, and South Korean Ministry of Food and Drug Safety (MFDS) databases, among other examples.

Additionally, or alternatively, the ingredient text 208 may be compared to a set of rules that indicate whether a component is allowed in a geographic region. The system may determine whether the product is approved or denied for listing on the online marketplace 216 based on whether any of the components of the product fail to satisfy a rule. For example, a rule may state that component X is prohibited in country Y above a percent composition Z. The set of rules may be managed by administrators of the online marketplace 216.

In some examples, if the seller is listing a product for sale in the U.S., the LLM 206 may be trained to identify the ingredients or components based on which specific state the seller is selling to. For example, if the seller's product includes Cannabidiol (CBD) or a similar substance, the LLM 206 may be trained to detect that CBD is permitted in some states (e.g., Colorado) but prohibited in other states. By way of another example, the LLM 206 may be trained on different state databases regarding rules of alcohol sales (e.g., Florida Department of Agriculture and Consumer Services (FDACS) databases), and may permit or prohibit certain products from being listed and sold in certain states based on such databases.

In addition to the ingredient text 208, the system may output the determination of whether the listing should be allowed or denied based on the components. In some examples, if a component is permitted but only below a threshold amount, then the output may also indicate the threshold amount. For example, the output may indicate that a component is allowed at a percent composition below 50% but is prohibited above 50% according to the database of FDA non-approved ingredients 212 or the database of FDA banned ingredients 214.

In some implementations, based on comparing the components in the ingredient text 208 to the ingredient lookup service 210, the product may be automatically denied, and the corresponding listing may be taken down from the online marketplace 216. A product may be automatically denied if any components in the ingredient text 208 are included in the database of FDA non-approved ingredients 212 or the database of FDA banned ingredients 214. In some examples, the product itself may be listed in an FDA database as a banned product. In such cases, the product may also be automatically denied and taken down from the online marketplace (if already posted) or not allowed to be posted in the first instance.

Alternatively, the product may be approved based on comparing the components in the ingredient text 208 to the ingredient lookup service 210. In such cases, the product may be listed for sale on the online marketplace 216. For example, the product may be approved if none of its components are included in the database of FDA non-approved ingredients 212 or the database of FDA banned ingredients 214.

In some implementations, the ingredient text 208 and/or the result of the comparison between the ingredient text 208 and the databases supported by the ingredient lookup service 210 may be sent to a customer support agent 218 for manual review. The customer support agent 218 may review the provided information and determine whether the product listing is approved or denied. For example, such manual review may be utilized if the product is relatively new or if some components are excluded from the FDA databases. The system may forward product listings that include new products or components the LLM 206 has not encountered or been trained on yet. Additionally, or alternatively, the customer support agent 218 may review listings on a random basis to check that the system is approving or denying the listings correctly. The customer support agent 218 may verify each individual component in the ingredient text 208 against the database of FDA non-approved ingredients 212 or the database of FDA banned ingredients 214 and approve or deny the listing accordingly. In some examples, feedback from the customer support agent 218 may be used to continuously retrain the LLM 206 and improve the model's ability to recognize new components in health and dietary supplements or food products.

FIG. 3 depicts an example of an image 300 of a product listed on an online marketplace in accordance with aspects of the present disclosure. The image 300 may be an example of an image 202 as described with reference to FIG. 2. In this example the image 300 may depict an advertisement or packaging for a health and dietary supplement, though the product may be any item in the health and dietary supplement or food categories.

The image 300 may depict details about the makeup of the dietary supplement under a heading such as "supplement facts," "active ingredients," or some other title. In some examples, the details may include a serving size (e.g., 2 capsules) and a number of servings per container (e.g., 30). In addition, the details may include a list of ingredients or components 302 that make up the dietary supplement in what amounts. In the example of the image 300, the amount of each component 302 may be given as an amount per serving (e.g., weight in mg or mcg) and a percent DV, however, the amount may additionally, or alternatively, be provided as a percent composition. For example, the components 302 may include 90 mg of Vitamin C (which is a 100% DV), 25 mcg of Vitamin D3 (which is a 125% DV), 100 mg of Turmeric (DV not applicable as indicated by an asterisk) and 350 mg of a multimineral blend (DV not applicable). In some cases, a component 302, such as the multimineral blend, may be a mixture of ingredients, which are also listed in the dietary supplement details. For example, the multimineral blend may include apple cider vinegar, dandelion root extract, and additional ingredients or compounds.

The image 300 may also include a depiction of the dietary supplement in a bottle 304 and any number of badges or symbols such as a badge 306, a natural ingredient symbol 308, a "made in USA" symbol 310, a good manufacturing practices (GMP)-certified symbol 312, and a formula symbol 314.

An LLM may recognize text from the image 300 and from that text, identify the components 302 or ingredients of the corresponding dietary supplement and output them in an ingredient text (e.g., the ingredient text 208 of FIG. 2) for comparison to a database of banned components. In the example of FIG. 3, the LLM may identify the components 302, including any ingredient mixtures included in the supplement facts. That is, the LLM may identify Vitamin C, Vitamin D3, Turmeric, and the Multimineral Blend including apple cider vinegar, dandelion root extract, and additional ingredients in the Multimineral Blend as components 302. The LLM may also identify the respective amounts of each of these components 302. In this way, the LLM may differentiate between text in the image 300 that is a component 302 and any other text, such as the text "Ultimate All-In-One Supplement Blend" on the badge 306, the symbols 308, 310, 312, and 314, the text "Supplement Blend" (e.g., a title) and "extra strength" on the bottle 304, and the text in the supplement facts relating to servings.

FIG. 4 depicts an example of a user interface 400 for AI-based system for product component identification in accordance with aspects of the present disclosure.

The user interface 400 may be utilized by an administrator of the AI-based system to generate a prompt for an LLM to identify one or more components of a health and dietary supplement or food product listed for sale on an online marketplace, as described herein. The user interface 400 may include a tool input 402 window that includes a text field 404 and an image URL field 406. The administrator may type a prompt into the text field 404, such as "What are the ingredients and their amount if > 0. Format output as json object." That is, the prompt may instruct the LLM to identify the components or ingredients of a relevant product and the respective amount of each component based on images of the product and provide an output in a JSON format. The prompt instructs the LLM to include the components and their amounts (e.g., in weight or percent composition) if greater than zero (e.g., 0 mg or 0%). The prompt may be modified to obtain different results from the LLM, and in some examples, the prompt may be predefined (e.g., instead of being typed into the text field 404 at runtime). The administrator may type a URL in the image URL field 406 that corresponds to an image of the product. For example, the URL may be to a listing of the product on the online marketplace. The administrator may select the "execute" button 408 to prompt the LLM (e.g., execute the LLM based on the prompt).

According to the prompt, the LLM may output an image preview 410 based on the information input into the text field 404 and the image URL field 406. The image preview 410 may show an image 412 of the product (e.g., the same image that a user uploaded in the corresponding listing that lists the components of the product).

The AI-system may display an output 414 via the user interface 400. The output 414 may be generated in part by the LLM and in part by the AI system itself. In the example of the user interface 400, the output 414 may include a list of the components and their respective amounts in a text format (e.g., JSON) as identified by the LLM. For example, the list of components may include "Vitamin C" at an amount "90 mg." The AI-system may then compare the output components to databases of banned components (e.g., databases of FDA non-approved ingredients and FDA banned ingredients) and/or a set of rules (e.g., a lookup database) indicating which health and dietary supplements, foods, ingredients, or other components are prohibited in a specific country either categorically or above a threshold amount.

The AI-system may include an "allowed" status in the output 414 for each component, which indicates whether that component is allowed in that amount (e.g., "true"), and an overall "listing status" of allowed assuming that all other components identified by the LLM are also allowed. If the AI-system determines that a component is prohibited based on the rules, then the output 414 may indicated the "allowed" status as "false," and the "listing status" will be "blocked." In some examples, the output 414 may indicate that the product itself is prohibited. For example, before analyzing the individual components of a product, the LLM may determine that the product itself is prohibited. Additionally, the output 414 may indicate reasons for why the LLM determined the product to be permitted or prohibited. For example, for a prohibited item, the reasoning may state, "identified component 'Biphentin' is in the image provided and is the Canadian brand name for the active ingredient Methylphenidate, which is a Schedule II controlled substance in many countries, including the U.S." For a permitted item, the reasoning may state "identified component Vitamin C is in the image provided and is allowed in the U.S."

Having discussed exemplary details of an AI-based system for product component identification, consider now some examples of procedures to illustrate additional aspects of the techniques.

### Example Procedures

This section describes examples of procedures for an AI-based system for product component identification. Aspects of the procedures may be implemented in hardware, firmware, or software, or a combination thereof. The procedures are shown as a set of blocks that specify operations performed by one or more devices and are not necessarily limited to the orders shown for performing the operations by the respective blocks.

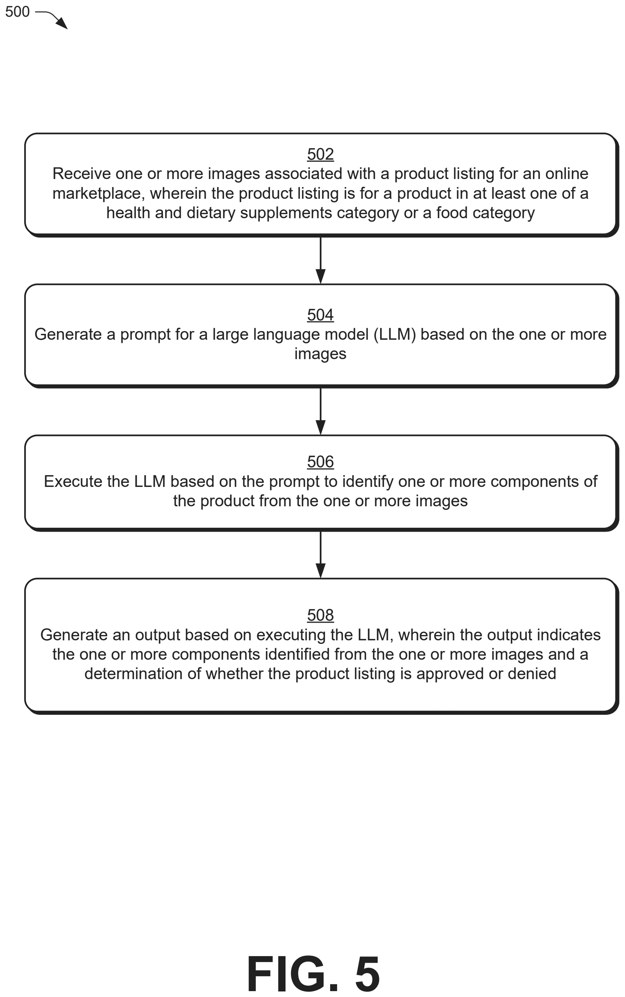

FIG. 5 depicts a procedure 500 in an example implementation of an AI-based system for product component identification.

One or more images associated with a product listing for an online marketplace is received, where the product listing is for a product in at least one of a health and dietary supplements category or a food category (block 502). By way of example, a user (e.g., seller) may post a listing 114 of a product for sale on the online marketplace 112. The product may be a health and dietary supplement (e.g., vitamins) or a food product (e.g., a beverage). The listing 114 may include one or more images 124 of the product.

A prompt for an LLM is generated based on the one or more images (block 504). By way of example, the prompt may include text instructions for the LLM to identify one or more components (e.g., ingredients) from the images 124.

The LLM executes based on the prompt to identify one or more components of the product from the one or more images (block 506). By way of example, the LLM may recognize text in the images 124 to identify the components. The text may include an ingredients list or "supplement facts" on product packaging shown in an image 124. In some examples, the LLM may also identify amounts (e.g., weights or percent compositions) of each component in the product.

An output is generated based on executing the LLM, where the output indicates the one or more components identified from the one or more images and a determination of whether the product listing is approved or denied (block 508). By way of example, the system may determine whether the product listing is approved or denied based on comparing the components identified by the LLM to a set of rules indicating which components (and in some cases, which products themselves) are allowed at which amounts in different geographic regions.

Having described examples of procedures in accordance with one or more implementations, consider now an example of a system and device that can be utilized to implement the various techniques described herein.

FIG. 6 illustrates an example of a system 600 generally that includes an example of a computing device 602 that is representative of one or more computing systems and/or devices that may implement the various techniques described herein. This is illustrated through inclusion of the application 110 and the component identification module 106. The computing device 602 may be, for example, a server of a service provider, a device associated with a client (e.g., a client device), an on-chip system, and/or any other suitable computing device or computing system.

The example computing device 602 as illustrated includes a processing system 604, one or more computer-readable media 606, and one or more I/O interfaces 608 that are communicatively coupled, one to another. Although not shown, the computing device 602 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 604 is representative of functionality to perform one or more operations using hardware. Accordingly, the processing system 604 is illustrated as including hardware elements 610 that may be configured as processors, functional blocks, and so forth. This may include implementation in hardware as an application specific integrated circuit or other logic device formed using one or more semiconductors. The hardware elements 610 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable media 606 is illustrated as including memory/storage 612. The memory/storage 612 represents memory/storage capacity associated with one or more computer-readable media. The memory/storage 612 may include volatile media (such as random access memory (RAM)) and/or nonvolatile media (such as read only memory (ROM), Flash memory, optical disks, magnetic disks, and so forth). The memory/storage 612 may include fixed media (e.g., RAM, ROM, a fixed hard drive, and so on) as well as removable media (e.g., Flash memory, a removable hard drive, an optical disc, and so forth). The computer-readable media 606 may be configured in a variety of other ways as further described below.

Input/output interface(s) 608 are representative of functionality to allow a user to enter commands and information to computing device 602 and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which may employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 602 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independence, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 602. By way of example, and not limitation, computer-readable media may include "computer-readable storage media" and "computer-readable signal media."

"Computer-readable storage media" may refer to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" may refer to a signal-bearing medium that is configured to transmit instructions to the hardware of the computing device 602, such as via a network. Signal media typically may embody computer readable instructions, data structures, program modules, or other data in a modulated data signal, such as carrier waves, data signals, or other transport mechanisms. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 610 and computer-readable media 606 are representative of modules, programmable device logic and/or fixed device logic implemented in a hardware form that may be employed in some embodiments to implement at least some aspects of the techniques described herein, such as to perform one or more instructions. Hardware may include components of an integrated circuit or on-chip system, an application-specific integrated circuit (ASIC), a field-programmable gate array (FPGA), a complex programmable logic device (CPLD), and other implementations in silicon or other hardware. In this context, hardware may operate as a processing device that performs program tasks defined by instructions and/or logic embodied by the hardware as well as a hardware utilized to store instructions for execution, e.g., the computer-readable storage media described previously.

Combinations of the foregoing may also be employed to implement various techniques described herein. Accordingly, software, hardware, or executable modules may be implemented as one or more instructions and/or logic embodied on some form of computer-readable storage media and/or by one or more hardware elements 610. The computing device 602 may be configured to implement particular instructions and/or functions corresponding to the software and/or hardware modules. Accordingly, implementation of a module that is executable by the computing device 602 as software may be achieved at least partially in hardware, e.g., through use of computer-readable storage media and/or hardware elements 610 of the processing system 604. The instructions and/or functions may be executable/operable by one or more articles of manufacture (for example, one or more computing devices 602 and/or processing systems 604) to implement techniques, modules, and examples described herein.

The techniques described herein may be supported by various configurations of the computing device 602 and are not limited to the specific examples of the techniques described herein. This functionality may also be implemented all or in part through use of a distributed system, such as over a "cloud" 614 via a platform 616 as described below.

The cloud 614 includes and/or is representative of a platform 616 for resources 618. The platform 616 abstracts underlying functionality of hardware (e.g., servers) and software resources of the cloud 614. The resources 618 may include applications and/or data that can be utilized while computer processing is executed on servers that are remote from the computing device 602. Resources 618 can also include services provided over the Internet and/or through a subscriber network, such as a cellular or Wi-Fi network.

The platform 616 may abstract resources and functions to connect the computing device 602 with other computing devices. The platform 616 may also serve to abstract scaling of resources to provide a corresponding level of scale to encountered demand for the resources 618 that are implemented via the platform 616. Accordingly, in an interconnected device embodiment, implementation of functionality described herein may be distributed throughout the system 600. For example, the functionality may be implemented in part on the computing device 602 as well as via the platform 616 that abstracts the functionality of the cloud 614.

### Conclusion

Although the systems and techniques have been described in language specific to structural features and/or methodological acts, it is to be understood that the systems and techniques defined in the appended claims are not necessarily limited to the specific features or acts described. Rather, the specific features and acts are disclosed as example forms of implementing the claimed subject matter.

## Claims

1. A computer-implemented method comprising:
receiving one or more images associated with a product listing for an online marketplace, wherein the product listing is for a product in at least one of a health and dietary supplements category or a food category;
generating a prompt for a large language model (LLM) based on the one or more images;
executing the LLM based on the prompt to identify one or more components of the product from the one or more images; and
generating an output based on executing the LLM, wherein the output indicates the one or more components identified from the one or more images and a determination of whether the product listing is approved or denied.

2. The computer-implemented method of claim 1, further comprising:
comparing the one or more components to a dataset that comprises component regulations for a geographic region; and
determining that the product listing is approved or denied based on the dataset indicating that the one or more components are allowed or banned in the geographic region.

3. The computer-implemented method of claim 1 or 2, further comprising:
comparing the one or more components to a set of rules that indicate whether a component is allowed in a geographic region; and
determining that the product listing is approved or denied based on whether the component is allowed in the geographic region according to the set of rules.

4. The computer-implemented method of any one of the preceding claims, further comprising:
sending the output to a user for manual review, wherein the determination of whether the product listing is approved or denied is based on the manual review.

5. The computer-implemented method of any one of the preceding claims, further comprising:
displaying, to a user via a user interface, an indication that the product listing is denied based on the output.

6. The computer-implemented method of any one of the preceding claims, wherein each component corresponds to a weight or percent composition of the product.

7. The computer-implemented method of any one of the preceding claims, wherein identifying the one or more components of the product comprises recognizing text in the one or more images that corresponds to the one or more components.

8. The computer-implemented method of any one of the preceding claims, wherein the output indicates that none of the one or more images depicted the one or more components.

9. The computer-implemented method of any one of the preceding claims, wherein the product listing is denied based on at least one component of the one or more components having an amount that is greater than a threshold amount.

10. The computer-implemented method of any one of the preceding claims, further comprising:
removing the product listing from the online marketplace based on the product listing being denied.

11. The computer-implemented method of any one of the preceding claims, wherein the product listing is denied based on the product itself being banned in a geographic region.

12. A system, comprising:
one or more processors; and
memory storing instructions that, when executed by the one or more processors, cause the system to perform the method of any one of claims 1 to 11.

13. A non-transitory computer-readable media storing instructions that, when executed by one or more processors, cause the one or more processors to perform the method of any one of claims 1 to 11.
